# FASCICULE DE BREVET EUROPEEN

(11) **EP 2 240 411 B1**
(45) Date de publication et mention de la délivrance du brevet: **14.09.2011**
(21) Numéro de dépôt: 08872550.2
(22) Date de dépôt: 15.12.2008
(51) Int. Cl.: C02F 1/04, B01D 1/16, C02F 103/08, C02F 1/36

(54) **DISPOSITIF DE DESSALEMENT DE L'EAU DE MER PAR PULVÉRISATION À TEMPÉRATURE AMBIANTE**
VORRICHTUNG ZUR ENTSALZUNG VON MEERWASSER DURCH VERSPRÜHEN BEI UMGEBUNGSTEMPERATUR
DEVICE FOR DESALINATING SEA WATER BY SPRAYING AT AMBIENT TEMPERATURE

(30) Priorité: 27.12.2007 FR 0709113
(43) Date de publication de la demande: 20.10.2010
(73) Titulaire: Pallanca, Charles, 06100 Nice (FR); Renggli, Henri, 06110 Le Cannet (FR); Ching, Gil, 06620 Le Bar sur Loup (FR)
(72) Inventeur: RENGGLI, Henri, F-06110 Le Cannet (FR); CHING, Gil, F-06620 Le Bar sur Loup (FR)
(74) Mandataire: Bonneau, Gérard
(86) Numéro de dépôt international: PCT/FR2008/001740
(87) Numéro de publication internationale: WO 2009/103890

(56) Documents cités:
- EP-A- 0 306 294
- FR-A- 2 337 693
- JP-A- 58 124 580
- JP-A- 58 128 181
- US-A- 3 317 405

## Description

### Domaine technique

La présente invention concerne les techniques de dessalement de l'eau de mer basées sur la pulvérisation de l'eau de mer en gouttelettes suivie de la vaporisation de l'eau, et concerne en particulier un dispositif de dessalement de l'eau de mer utilisant la pulvérisation à température ambiante.

### Etat de la technique

Aujourd'hui, l'eau devient une denrée précieuse du fait que beaucoup de régions du monde manquent d'eau pendant de longues périodes. Pourtant, les océans remplis d'eau salée recouvrent les trois quarts de la surface du globe. On a donc songé depuis longtemps à dessaler l'eau de mer pour obtenir de l'eau douce consommable.

Les techniques de dessalement de l'eau de mer sont basées soit sur la distillation, soit sur la filtration. La technique la plus ancienne toujours utilisée est la distillation dans laquelle l'eau est évaporée dans des modules successifs. Dans chaque module, l'eau de mer résiduelle se trouve concentrée en sel après vaporisation et la saumure est récupérée et évacuée. Cette technique n'est envisageable que lorsque la source chaude est pratiquement gratuite, résidu d'une centrale.

Les techniques basées sur la filtration de l'eau de mer utilisent le principe d'osmose inverse décrite dans le brevet français 2850038-A1. La pression osmotique correspond à la pression différentielle entre les deux parties d'une enceinte séparées par une membrane semi-perméable. D'un coté de la membrane se trouve le solvant et de l'autre coté un mélange binaire sel plus solvant. A l'équilibre, le solvant ne traverse plus la membrane semi-perméable car la pression du coté solvant /sel a atteint la pression osmotique. Lorsque mécaniquement, la pression du coté solvant/sel est augmentée et devient supérieure à la pression osmotique le solvant peut traverser la membrane. La pression osmotique pour l'eau de mer est d'environ 25bars. Les pressions de fonctionnement pour dessaler l'eau de mer sont de l'ordre de 70 à 100 bars. L'inconvénient majeur de cette technique est qu'elle est coûteuse du fait du prix élevé des membranes semi-perméables. De plus, comme la technique précédente, ce dispositif est polluant car la saumure doit être rejetée.

De façon à remédier aux inconvénients présentés par les techniques mentionnées ci-dessus, a été mise au point une technique de vaporisation de l'eau basée sur la pulvérisation de l'eau de mer en gouttelettes préalablement à la vaporisation. Cette technique est décrite dans les brevets GB 1.233.483 et US 3.207.676 où la pulvérisation de l'eau en gouttelettes est obtenue par détente sous pression dans une enceinte au travers d'une buse par vibration d'une plaque sur laquelle s'écoule un film d'eau. La vaporisation est obtenue grâce au chauffage de l'enceinte ou de l'eau.

Le brevet DE 3.122.312 décrit un dispositif de dessalement dans lequel l'eau de mer est pulvérisée au moyen d'une onde acoustique générée par un dispositif piézo-électrique. Un tel dispositif utilise la vibration d'un cône en métal de fine épaisseur sur lequel l'eau à pulvériser peut ruisseler, la pulvérisation se faisant au niveau des ventres de vibration. Le diamètre des gouttes pour ce genre de pulvérisation est de l'ordre de la centaine de microns et la fréquence de vibration est toujours inférieure à 100kHz.

Malheureusement, les dispositifs décrits ci-dessus utilisant la pulvérisation de l'eau de mer ne sont pas performants dans la mesure où les gouttes d'eau obtenues ont un diamètre d'au moins 100 microns et donc une surface d'échange trop faible. En outre, ils nécessitent tous un apport de chaleur, soit pour l'eau à dessaler, soit pour l'air environnant.

### Exposé de l'invention

C'est pourquoi le but de l'invention est de réaliser un dispositif de dessalement de l'eau de mer par vaporisation basé sur la pulvérisation préalable en gouttelettes ultrafines de façon à obtenir une surface d'échange maximale lors de la vaporisation, ceci sans apport de chaleur.

L'objet de l'invention est donc un dispositif de dessalement de l'eau de mer comprenant une unité de pulvérisation de l'eau de mer en gouttelettes, une unité de vaporisation des gouttelettes en vapeur d'eau, une unité de séparation de la vapeur d'eau et des particules de sel, et une unité de condensation de la vapeur d'eau en eau douce. L'unité de pulvérisation comprend une entrée d'eau de mer, une entrée d'air sec à température ambiante et un dispositif de génération d'ondes acoustiques de fréquence supérieure à 1 MHz focalisées au moyen de buses recevant l'eau de mer provenant de l'entrée d'eau de mer de façon à obtenir des microgouttelettes d'un diamètre compris entre environ 2,5 microns et environ 5 microns.

Un autre objet de l'invention est un système de dessalement d'eau de mer constitué d'une pluralité de dispositifs de dessalement selon l'invention, comprenant une pompe de circulation d'air recevant l'air sortant de l'unité de condensation du dernier dispositif de dessalement par la sortie ainsi que par une entrée d'air s'il est nécessaire de faire entrer dans le circuit de l'air sec en plus de l'air qui est récupéré à cette sortie. Une entrée d'eau de mer fournit l'eau de mer nécessaire au fonctionnement de tous les dispositifs de dessalement, chaque dispositif sauf le dernier comportant à la sortie de son unité de condensation une vanne 3 voies adaptée pour prélever la quantité d'eau de mer nécessaire et l'envoyer à l'unité de pulvérisation du dispositif.

### Description brève des figures

Les buts, objets et caractéristiques de l'invention apparaîtront plus clairement à la lecture de la description qui suit faite en référence aux dessins dans lesquels :
la figure 1 est un schéma fonctionnel représentant le dispositif de dessalement de l'eau de mer selon l'invention; et

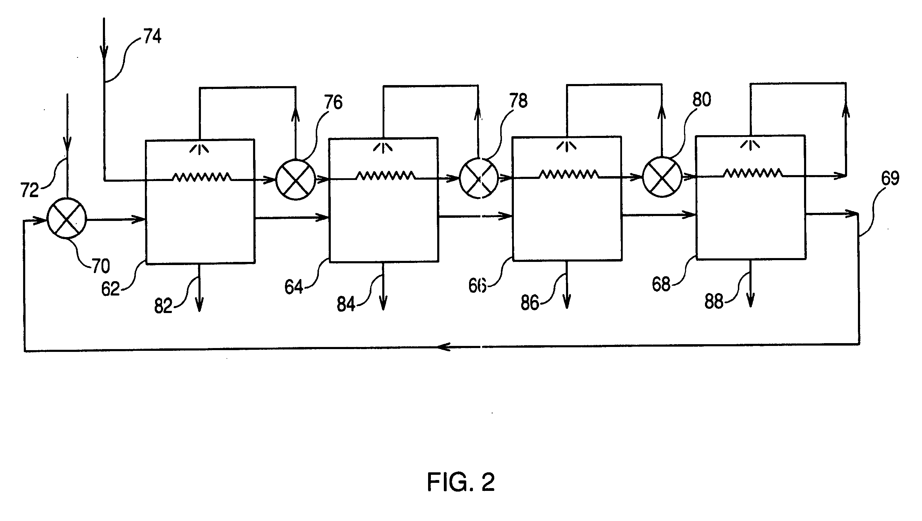

la figure 2 est un schéma fonctionnel représentant un système de dessalement de l'eau de mer constitué de plusieurs dispositifs de dessalement selon l'invention illustrés sur la figure 1.

### Description détaillée de l'invention

Le dispositif selon l'invention est constitué d'une unité de pulvérisation 10, une unité de vaporisation 20, une unité de séparation 30 et d'une unité de condensation 40.

L'eau de mer est fournie à l'unité de pulvérisation 10 par une entrée 12 et un écoulement d'air sec non saturé en humidité est fourni par une entrée 14. La pulvérisation est réalisée de au moyen d'un dispositif de génération d'ondes acoustiques haute fréquence 16 et des buses 17 recevant l'eau de mer de façon à obtenir des microgouttelettes d'un diamètre de quelques microns. Le dispositif 16 est de préférence un dispositif piézoélectrique générant une onde acoustique qui se propage et est concentrée dans le milieu à pulvériser par l'intermédiaire des buses 17. Le liquide est amené sous faible pression dans les buses et forme un jet à la sortie de celles-ci. L'onde acoustique focalisée par chaque buse se trouve concentrée dans le jet. La forte intensité acoustique arrache alors des microgouttelettes de la paroi de ce jet. L'écoulement de l'air est tel qu'il entraîne dans sa trajectoire les fines gouttelettes d'eau alors que les grosses gouttes sont évacuées par une sortie 18.

Selon une caractéristique essentielle de l'invention, le dispositif piézoélectrique 16 génère une haute fréquence acoustique d'au moins 1 MHz, et de préférence de 2 MHz, qui présente l'avantage de pulvériser l'eau en gouttelettes très fines dont le diamètre est généralement compris entre 2,5 et 5 microns, soit environ 6 milliards de gouttelettes pour 1g d'eau et une surface d'échange entre les gouttelettes d'eau et l'air de l'ordre de 2 m² pour 1g d'eau.

Les fines gouttelettes entraînées par l'air entrent dans l'unité de vaporisation 20 par une entrée 22. La taille des gouttelettes permet un rapport surface volume suffisant pour effectuer une vaporisation à température ambiante. La grande surface d'échange entre l'air et les gouttelettes de liquide pulvérisé permet aux gouttelettes de se vaporiser rapidement. Le temps de vaporisation dépend du taux d'humidité relative de l'air car plus l'air est proche de la saturation plus cette vaporisation est longue. C'est pourquoi il est nécessaire que le flux d'air qui entraîne les gouttelettes soit sec. Cependant, pour prendre en compte cette variabilité d'humidité de l'air, le trajet des gouttelettes doit être suffisamment long pour que le mélange air/gouttelettes soit transformé en un mélange air humide et cristaux de sel en arrivant à la sortie de l'unité de vaporisation 20. Ceci est obtenu par une structure en labyrinthe 24 comme représenté schématiquement sur la figure.

Après vaporisation, le flux sortant de l'unité de vaporisation 20 entre dans l'unité de séparation 30 par une entrée 32. Il contient alors un mélange gazeux air/liquide vaporisé et des particules solides de sel. Dans l'unité de séparation 30, la séparation des cristaux solides de sel peut être effectuée par différents moyens tels que filtration, centrifugation, captation électrostatique.

La filtration peut être fait au travers d'une paroi perméable dont les pores ont un diamètre inférieur à la taille des cristaux. Les cristaux sont arrêtés par le filtre alors que le gaz passe au travers du filtre.

La séparation centrifuge est obtenue en mettant en rotation le mélange fluide. La force centrifuge projette les particules solides plus denses que le gaz à l'extérieur de l'écoulement. Les particules solides sont récupérées sur la paroi externe du centrifugeur.

La séparation électrostatique qui est le mode de réalisation préférentiel, est effectuée au moyen d'un filtre électrostatique 34 consistant à faire passer le mélange dans un champ électrique très intense. Les particules chargées sont ensuite attirées par des plaques métalliques ayant une polarisation opposée à la charge des particules, les plaques étant judicieusement placées pour arrêter toutes les particules. Ce dispositif est d'autant plus efficace que les particules sont de petite taille et son avantage est de présenter une très faible perte de charge vis-à-vis de l'écoulement de l'air qui circule.

Quel que soit le mode de réalisation utilisé pour la séparation, les particules solides de sel récupérées sont évacuées de l'unité de séparation par la sortie 36.

L'air humide sortant de l'unité de séparation 30 entre ensuite dans l'unité de condensation 40 par l'entrée 42. Il se libère de son eau sur un condenseur 44 maintenu à une température inférieure à celle de l'air entrant dans l'unité de condensation 40. Bien qu'un condenseur spécifique pourrait être utilisé, une caractéristique de l'invention consiste à faire entrer dans le condenseur 44 l'eau de mer que l'on désire dessaler par l'entrée 46. De façon générale la température de l'eau de mer est comprise entre 10°C et 15°C alors que l'air circulant dans le dispositif est à la température ambiante, c'est-à-dire comprise entre 20°C et 25°C.

L'eau douce qui a été condensée grâce au condenseur 44 est récupérée à la sortie 48. Les calories libérées par l'air humide en se condensant sur le condenseur 44 sont utilisées pour élever la température de l'eau de mer à la sortie du condenseur.

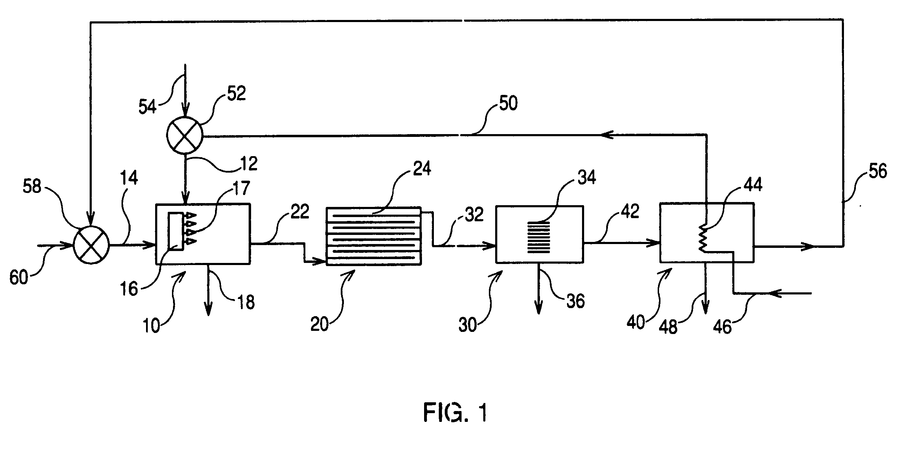

Selon le mode de réalisation préférentiel représenté sur la figure 1, l'eau de mer qui sort de l'unité de condensation 40 par la sortie 50 est à température ambiante. Si la température de l'eau de mer est trop basse, il est possible de prévoir un moyen de réchauffement (non montré) sur la sortie 50. L'eau de mer est alors envoyée à la pompe de circulation d'eau de mer 52. Une entrée 54 permet, si nécessaire, de faire entrer dans le circuit de l'eau de mer en plus de celle qui est introduite à l'entrée 46. L'eau de mer mise en circulation par la pompe 52 est introduite dans l'unité de pulvérisation par l'entrée 12 comme décrit ci-dessus.

Selon une caractéristique de l'invention, l'air sec qui sort de l'unité de condensation 40 par la sortie 56 est utilisé pour l'entraînement de l'eau à travers le dispositif. Pour ce faire, l'air récupéré à la sortie 56 est envoyé dans une pompe de circulation d'air 58 qui fournit l'air à l'entrée 14 comme décrit ci-dessus. Une entrée 60 permet, si nécessaire, de faire entrer dans le circuit de l'air sec en plus de l'air qui est récupéré à la sortie 56, par exemple lorsque l'air circulant dans le dispositif est trop humide. A noter que si la température de l'air sec à la sortie 56 est trop basse, par exemple inférieure à 20°C, il est possible de prévoir un moyen de réchauffement (non montré) sur la sortie 56.

Selon un autre mode de réalisation de l'invention, une pluralité de dispositifs de dessalement comme celui qui vient d'être décrit peuvent être connectés en série pour former un système de dessalement de l'eau de mer. Un système comprenant 4 dispositifs de dessalement 62, 64, 66 et 68 est illustré sur la figure. A noter qu'un tel système pourrait comporter un nombre quelconque de dispositifs de dessalement comme celui illustré sur la figure 1.

La circulation de l'air dans le système se fait grâce à une pompe de circulation d'air 70 qui reçoit l'air sortant du dernier dispositif 68 par la sortie 69 ainsi que par une entrée d'air 72 s'il est nécessaire de faire entrer dans le circuit de l'air sec en plus de l'air qui est récupéré à la sortie 69, par exemple lorsque l'air circulant dans le système est trop humide.

L'eau de mer est fournie par une entrée 74 du premier dispositif 62. Le débit de cette entrée qui doit être suffisant pour fournir l'eau de mer à tous les dispositifs, est établi en fonction du nombre de dispositifs de dessalement dans le système. A la sortie de l'unité de condensation de chacun des dispositifs 62, 64 et 66, des vannes 3 voies permettent de prélever une partie de l'eau de mer et de l'envoyer à l'unité de pulvérisation du dispositif. Ainsi, la vanne 76 permet d'envoyer l'eau de mer nécessaire à l'unité de pulvérisation du dispositif 62, la vanne 78 à l'unité de pulvérisation du dispositif 64 et la vanne 80 à l'unité de pulvérisation du dispositif 66. L'eau de mer provenant du condenseur du dispositif 68 est envoyée dans sa totalité à l'entrée de l'unité de pulvérisation du dispositif 68.

Enfin, chaque dispositif comporte une sortie d'eau douce, la sortie 82 pour le dispositif de dessalement 62, la sortie 84 pour le dispositif de dessalement 64, la sortie 86 pour le dispositif de dessalement 66 et la sortie 88 pour le dispositif de dessalement 68.

## Revendications

1. Dispositif de dessalement de l'eau de mer comprenant une unité de pulvérisation (10) de l'eau de mer en gouttelettes, une unité de vaporisation (20) desdites gouttelettes en vapeur d'eau, une unité de séparation (30) de la vapeur d'eau et des particules de sel, et une unité de condensation (40) de la vapeur d'eau en eau douce;
ledit dispositif étant **caractérisé en ce que** ladite unité de pulvérisation comprend une entrée d'eau de mer (12), une entrée d'air sec (14) à température ambiante et un dispositif de génération d'ondes acoustiques de fréquence supérieure à 1 MHz focalisées au moyen de buses (17) recevant l'eau de mer provenant de ladite entrée d'eau de mer de façon à obtenir des microgouttelettes d'un diamètre compris entre environ 2,5 microns et environ 5 microns.

2. Dispositif selon la revendication 1, dans lequel ledit dispositif de génération d'ondes acoustiques (16) est un dispositif piézoélectrique générant des ondes acoustiques qui se propagent dans l'eau de mer amenée sous faible pression dans chacune desdites buses (17) et forme un jet à la sortie de celles-ci.

3. Dispositif selon la revendication 1, dans lequel les ondes acoustiques générées par ledit dispositif de génération d'ondes acoustiques (16) ont une fréquence de 2 MHz.

4. Dispositif selon la revendication 1, 2 ou 3, dans lequel ladite unité de vaporisation (20) comporte une structure en labyrinthe (24) obligeant lesdites gouttelettes à effectuer un trajet suffisamment long pour être transformées en un mélange air humide et cristaux de sel en arrivant à la sortie de ladite unité de vaporisation.

5. Dispositif selon la revendication 4, dans lequel ladite unité de séparation (30) comprend un filtre électrostatique (34) dans lequel les particules solides de sel sont d'abord polarisées en faisant passer le mélange dans un champ électrique très intense puis attirées par des plaques métalliques ayant une polarisation opposée à la charge des particules.

6. Dispositif selon la revendication 5, dans lequel ladite unité de condensation (40) comprend un condenseur (44) adapté pour condenser la vapeur d'eau contenue fournie par ladite unité de séparation (30), ledit condenseur recevant l'eau de mer à dessaler à une température comprise entre 10°C et 15°C.

7. Dispositif selon la revendication 6, comprenant en outre une pompe de circulation d'eau de mer (52) recevant l'eau de mer provenant dudit condenseur (44) de manière à l'envoyer à l'entrée (12) de ladite unité de pulvérisation (10).

8. Dispositif selon l'une des revendications 1 à 7, comprenant en outre une pompe de circulation d'air (58) qui fournit l'air sec provenant de ladite unité de condensation (40) à l'entrée d'air sec de ladite unité de pulvérisation (10).

9. Système dessalement d'eau de mer constitué d'une pluralité de dispositifs de dessalement selon l'une des revendications 1 à 6, comprenant une pompe de circulation d'air (70) recevant l'air sortant de l'unité de condensation du dernier dispositif de dessalement (68) par la sortie (69) ainsi que par une entrée d'air (72) s'il est nécessaire de faire entrer dans le circuit de l'air sec en plus de l'air qui est récupéré à ladite sortie (69).

10. Système selon la revendication 9, comprenant une entrée d'eau de mer (74) fournissant l'eau de mer nécessaire au fonctionnement de tous les dispositifs de dessalement, chacun desdits dispositifs sauf le dernier comportant à la sortie de son unité de condensation une vanne 3 voies adaptée pour prélever la quantité d'eau de mer nécessaire et l'envoyer à l'unité de pulvérisation dudit dispositif.

## Claims

1. Sea water desalination device comprising an atomization unit (10) to turn the sea water into droplets, a vaporization unit (20) to turn said droplets into water vapor, a separation unit (30) to separate the water vapor and salt particles, and a condensation unit (40) to condense the water vapor into fresh water;
said device being **characterized in that** said atomization unit comprises a sea water intake (12), an intake of dry air (14) at ambient temperature and a device for generating acoustic waves with frequencies above 1 MHz focused by means of nozzles (17) receiving the sea water from said sea water intake to obtain microdroplets with a diameter ranging from about 2.5 microns to about 5 microns.

2. Device according to claim 1, wherein said device for generating acoustic waves (16) is a piezoelectric device that generates acoustic waves, which propagate in sea water brought at low pressure in each of said nozzles (17) and forms a jet at their outlet.

3. Device according to claim 1 wherein the acoustic waves generated by said device for generating acoustic waves (16) have a frequency of 2 MHz.

4. Device according to claim 1, 2 or 3, wherein said vaporization unit (20) comprises a labyrinth structure (24) that forces said droplets to make a trip long enough to be transformed into a mixture of moist air and salt crystals upon arrival at the outlet of said vaporization unit.

5. Device according to claim 4, wherein said separation unit (30) includes an electrostatic filter (34) in which the solid salt particles are first polarized by passing the mixture through a very intense electric field, then attracted by metal plates having a polarization opposite to the charge of the particles.

6. Device according to claim 5, wherein said condensation unit (40) comprises a condenser (44) designed to condense the contained water vapor supplied by said separation unit (30), said condenser receiving the sea water to be desalinated at a temperature ranging between 10°C and 15°C.

7. Device according to claim 6, further comprising a sea water circulation pump (52) receiving the sea water from said condenser (44) in order to send it to the intake (12) of said atomization unit (10).

8. Device according to one of claims 1 to 7, further comprising an air circulation pump (58) that supplies dry air from said condensation unit (40) to the dry air intake of said atomization unit spray (10).

9. Sea water desalination system consisting of a plurality of desalination devices according to one of claims 1 to 6, comprising an air circulation pump (70) receiving the air leaving the condensation unit of the last desalination device (68) through the outlet (69) as well as from an air Intake (72), if it is necessary to let dry air enter the circuit In addition to air recovered from said outlet (69).

10. System according to claim 9, comprising a sea water intake (74) providing the sea water needed to operate all the desalination devices, each of said devices except the last one comprising at the exit from its condensation unit a 3-way valve designed to collect the amount of sea water needed and to send it to the atomization unit of said device.

## Patentansprüche

1. Vorrichtung zum Entsalzen von Meerwasser, die eine Abspritzeinheit (10) zum Abspritzen des Meerwassers in Tröpfchen, eine Verdampfungseinheit (20) zur Verdampfung der genannten Tröpfchen in Wasserdampf, eine Trenneinheit (30) des Wasserdampfes und der Salzpartikel und eine Kondensationseinheit (40) zum Kondensieren des Wasserdampfes in Süßwasser enthält;
wobei die genannte Vorrichtung **dadurch gekennzeichnet ist, dass** die genannte Abspritzeinheit einen Meerwasser (12)-, Trockenlufteinlass (14) in Umgebungstemperatur und eine Vorrichtung zur Erzeugung akustischer Wellen mit einer Frequenz höher als 1 MHz, fokussiert durch eine Düse (17), die das Meerwasser entstammend aus dem Meerwassereinlass derart aufnimmt, dass Mikro-Tröpfchen mit einem Durchmesser von ungefähr 2,5 Mikrons bis ungefähr 5 Mikrons entstehen, enthält.

2. Vorrichtung nach Anspruch 1, in welcher die genannte Vorrichtung zur Erzeugung akustischer Wellen (16), die eine piezoelektrische Einrichtung ist, die akustische Wellen erzeugt, die sich im Meerwasser verbreiten, welches unter schwachem Druck in alle genannten Düsen (17) eingeführt wird und am Auslass dieser Düsen (17) einen Strahl bildet.

3. Vorrichtung nach Anspruch 1, in welcher die durch die genannte Vorrichtung zur Erzeugung akustischer Wellen erzeugten akustischen Wellen (16) eine Frequenz von 2 MHz besitzen.

4. Vorrichtung nach Anspruch 1, 2, 3, in welcher die genannte Verdampfungseinheit (20) eine Labyrinth-Struktur (24) aufweist, die die genannten Tröpfchen zwingt, einen genügend langen Weg zu nehmen, um in eine Mischung aus Feuchtluft und Salzkristallen bei der Ankunft am Auslass der genannten Verdampfungseinheit verwandelt zu werden.

5. Verfahren nach Anspruch 4, in welchem die genannte Trenneinheit (30) einen elektrostatischen Filter (34) enthält, in welchem die festen Salzpartikel zuerst polarisiert werden indem die Mischung durch ein sehr intensives Elektrofeld geführt wird, dann von Metallplatten angezogen wird, die eine gegensätzliche Polarisierung zu Ladung der Partikel aufweist.

6. Vorrichtung nach Anspruch 5, in welchem die genannte Kondensationseinheit (40) einen Kondensator (44) enthält, der geeignet ist, den von der genannten Abscheideeinheit (30) gelieferten unterdrückten Wasserdampf zu kondensieren, wobei der genannte Kondensator Meerwasser zum Entsalzen in eine Temperatur zwischen 10°C und 15°C, aufnimmt.

7. Vorrichtung nach Anspruch 6, die ferner eine meerwasserführende (52) Pumpe enthält, die Meerwasser entstammend vom genannten Kondensator (44) derart aufnimmt, dass sie dieses zum Einlass (12) der genannten Abspritzeinheit (10) sendet.

8. Vorrichtung nach einem der Ansprüche 1 bis 7, die ferner eine Luftzirkulationspumpe (58) enthält, die trockene Luft aus der genannten Kondensationseinheit (40) entstammend am Trockenlufteinlass der genannten Abspritzeinheit (10) liefert.

9. Meerwasserentsalzungssystem bestehend aus einer Vielzahl von Entsalzungsvorrichtungen nach einem der Ansprüche 1 bis 6, das eine Luftzirkulationspumpe (70) enthält, die die Luft der letzten Entsalzungsvorrichtung (68) aufnimmt, die von der Kondensationseinheit durch den Auslass (69) austritt sowie durch einen Lufteinlass (72) falls es nötig ist im Kreislauf trockene Luft zusätzlich zu der Luft, die vom genannten Auslass (69) zurückgewonnen wird, aufzunehmen.

10. System nach Anspruch 9, das eine Meerwassereinlass (74) enthält, der das nötige Meerwasser für den Betrieb aller Entsalzungsvorrichtungen liefert, wobei jeder der genannten Vorrichtungen, außer der Letzten beim Auslass seiner Kondensatoreinheit ein Dreiwegventil angepasst, um die notwendige Meerwassermenge zu entnehmen und sie an die Abspritzeinheit der genannten Vorrichtung abzugeben, aufweist.
